# EUROPÄISCHE PATENTANMELDUNG

(11) **EP 3 670 617 A1**
(43) Veröffentlichungstag der Anmeldung: **24.06.2020**
(21) Anmeldenummer: 18215428.6
(22) Anmeldetag: 21.12.2018
(51) Int. Cl.: C09D 123/30, C09D 127/18, F16B 33/06, C08K 9/06, C08L 27/18, C08L 91/08

(54) **BESCHICHTUNG UND VERFAHREN ZUR VERBESSERUNG DES WARMLÖSEVERHALTENS VON SCHRAUBEN, INSBESONDERE VON ALUMINIUMSCHRAUBEN**

(71) Anmelder: Nedschroef Fraulautern GmbH, 66740 Saarlouis (DE)
(72) Erfinder: Egele, Joseph, 66386 St. Ingbert (DE); Uhlig, Dr. Steffen, 66773 Hülzweiler (DE); Stelzig, Stephan, 67122 Altrip (DE)
(74) Vertreter: Patentanwälte Dörner & Kötter PartG mbB

(57) **Zusammenfassung**

Die Erfindung betrifft eine Beschichtung für Schrauben, insbesondere Aluminiumschrauben, basierend auf einer wasserbasierenden Polytetrafluorethylenemulsion, wobei dieser oberflächenmodifizierte Nanopartikel beigemischt sind.

## Beschreibung

Die Erfindung betrifft eine Beschichtung zur Verbesserung des Warmlöseverhaltens von Schrauben insbesondere von Aluminiumschrauben, nach dem Oberbegriff des Patentanspruchs 1. Die Erfindung betrifft weiterhin ein Verfahren zur Verbesserung des Warmlöseverhaltens von Schrauben nach dem Oberbegriff des Patentanspruchs 6.

Um eine Schraubverbindung hinreichend zuverlässig berechnen zu können und diese in der Montage prozesssicher einsetzen zu können, ist eine bestimmte tribologische Eigenschaft der Schraube erforderlich, die sogenannte Reibungszahl, welche durch Schmierung erreicht wird. Nur bei Vorhandensein eines stabilen Reibwerts der Schraube kann eine Schraubverbindung die erforderliche vordefinierte gewünschte Klemmkraft dauerhaft erzeugen. Diese Kraft kann im Regelfall nicht direkt bestimmt werden. Daher wird hier als leicht zu ermittelnde Größe das Drehmoment beim Anzug der Schraube verwendet. Über die Reibeigenschaften der Schraubenoberfläche sind Drehmoment und Klemmkraft miteinander verknüpft. Um das Streuband der Klemmkraft klein zu halten und um die Schraube optimal auszunutzen, ist es erforderlich, die Oberfläche der Schraube zu beschichten und Reibungszahlen in einem engen Band einzustellen. Als Beschichtung für Aluminiumschrauben werden derzeit auf Polytetrafluorethylen (PTFE)-Emulsionen basierende Beschichtungssysteme verwendet. Auf dem Markt sind verschiedene Beschichtungssysteme für die Einstellung von definierten und eng tolerierten Reibeigenschaften von Aluminiumschrauben erhältlich. Diese Beschichtungssysteme sind gut für die prozesssichere, d.h. reproduzierbare, Verschraubung bei Raumtemperatur geeignet und erlauben die Einstellung der erforderlichen Reibungszahl.

Nachteilig an den vorbekannten Beschichtungssystemen ist, dass diese ihre Reibeigenschaften bei erhöhten Temperaturen vermindern, da PTFE unter Temperatur und Druck "dünnflüssiger" wird. Das hat zur Folge, dass eine Schraubverbindung zwar unter Raumtemperatur angezogen werden kann und die Schraubverbindung zuverlässig hält, wobei sich bei erhöhten Temperaturen und bei Unterschreitung einer kritischen Reibungszahl der Oberfläche die Schraubverbindung jedoch selbstständig lösen kann. Dieses selbstständige Lösen bei erhöhten Temperaturen wird als Warmlöseverhalten bezeichnet. Die Reibungszahl, welche beim Lösen einer Schraubverbindung unter Temperatur ermittelt wird, gilt als Maßstab für das Warmlöseverhalten. Unter Verbesserung des Warmlöseverhaltens versteht man die Erhöhung der Reibungszahl der Schraubenoberfläche bei festgelegter Prüftemperatur im direkten Vergleich zu einer Ausgangslage.

Die am Markt erhältlichen PTFE-Emulsionsbasierte Beschichtungssysteme zur Einstellung der Reibeigenschaften sind zur Verbesserung bzw. zur Einstellung des Warmlöseverhaltens bei erhöhten Temperaturen auf Aluminiumschrauben nur bedingt einsetzbar. Entweder besitzen die Systeme nicht die geforderten Reibeigenschaften (Reibungszahl nimmt mit steigender Temperatur ab) oder sind inkompatibel zum Werkstoff Aluminium. Lacke bestehen zum Beispiel aus mehreren Schichten mit Schichtdicken von bis zu 20 µm, was wiederum dazu führt, dass sich die Gewindekerne und Innenangriffe (Werkzeugansatz) der Schrauben unverhältnismäßig stark füllen und somit eine prozesssichere Montage wie z.B. in der Automobilindustrie nicht möglich ist.

Problematisch für den Einsatz bekannter Beschichtungssysteme auf Aluminium gestaltet sich häufig deren Einbrenntemperatur. Trocknungstemperaturen weit über 150°C zerstören das Gefüge einer Aluminiumschraube.

Hier will die Erfindung Abhilfe schaffen. Der Erfindung liegt die Aufgabe zugrunde, eine Beschichtung für Schrauben, insbesondere für Aluminiumschrauben zu schaffen, welche das Warmlöseverhalten der Schrauben weiter verbessert. Gemäß der Erfindung wird diese Aufgabe durch eine Beschichtung mit den Merkmalen des kennzeichnenden Teils des Patentanspruchs 1 gelöst.

Mit der Erfindung ist eine Beschichtung für Schrauben und Muttern, insbesondere aus Aluminium, geschaffen, durch die das Warmlöseverhalten der Schrauben weiter verbessert ist. Dadurch, dass einer bekannten PTFE-Emulsion als Basissystem oberflächenmodifizierte Nanopartikel beigemischt sind, ist eine Erhöhung der Reibungszahl bei erhöhten Temperaturen bewirkt, wobei die Reibungszahl bei Raumtemperatur durch diese Nanopartikel nur unwesentlich verändert wird. Selbstverständlich ist die erfindungsgemäße Beschichtung gleichermaßen für Muttern einsetzbar.

Vorteilhaft sind die Nanopartikel aus Siliziumoxid, bevorzugt aus Siliziumdioxid (SiO2) gebildet. Weiterhin können als Nanopartikel Aluminiumoxide, Titanoxide, Zirkonoxyde oder Mischungen aus diesen zum Einsatz kommen.

In Weiterbildung der Erfindung sind die Nanopartikel an ihrer Oberfläche mit Epoxygruppen belegt, die erst unter erhöhten Temperaturen von über 80°C miteinander vernetzen. Hierdurch ist eine blockierende Wirkung erzielt. Durch die unregelmäßige Netzwerkausbildung wird die Bewegung und somit das Fließen des Systems PTFE-Emulsion - Basis + oberflächenmodifizierte Nanopartikel behindert und das Warmlöseverhalten verbessert.

In Ausgestaltung der Erfindung sind die Epoxygruppen durch Silane an die Partikeloberflächen angebunden, die bei erhöhter Temperatur miteinander vernetzen können. Durch die Vernetzung werden die Fließeigenschaften derart modifiziert, dass ein Lösen der Schraube gehemmt wird.

In Ausgestaltung der Erfindung weisen die Nanopartikel eine monomodale oder eine polymodale Partikelgrößenverteilung auf. Dabei haben die Partikel bevorzugt eine Größe von 5 bis 15 Nanometer. Als besonders geeignet hat sich eine bi-modale Verteilung erwiesen, deren Maxima eine Größe mit einem Mittelwert von 5 sowie 15 Nanometern aufweisen. Besonders bevorzugt umfasst die PTFE-Emulsion Nanopartikel im Verhältnis 15 bis 25 gew-%.

Der Erfindung liegt weiterhin die Aufgabe zugrunde, ein Verfahren zur Verbesserung des Warmlöseverhaltens von Schrauben, insbesondere Aluminiumschrauben bereitzustellen. Gemäß der Erfindung wird diese Aufgabe durch ein Verfahren mit den Merkmalen des Patentanspruchs 6 gelöst. Dadurch, dass die Schrauben mit einer Beschichtung versehen werden, die auf einer PTFE-Emulsion basiert, der oberflächenmodifizierte Nanopartikel beigemischt sind, ist eine Erhöhung der Reibungszahl bei erhöhten Temperaturen bewirkt, wobei die Reibungszahl bei Raumtemperatur durch diese Nanopartikel nur unwesentlich verändert wird.

In Weiterbildung der Erfindung kommen in der Beschichtung sowohl monomodale wie auch polymodale Partikelgrößenverteilungen zum Einsatz. Dabei haben die Partikel bevorzugt eine Größe von 5 bis 15 Nanometer. Besonders bevorzugt werden die Nanopartikel im Verhältnis 15 bis 25 gew-% der wasserbasierten PTFE-Emulsion beigegeben.

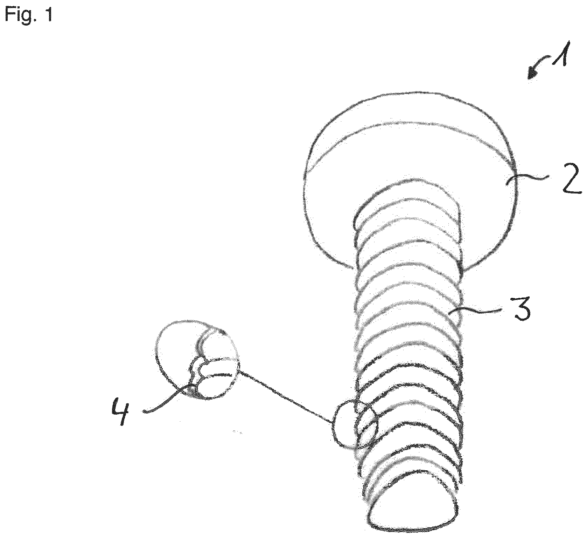

Andere Weiterbildungen und Ausgestaltungen der Erfindung sind in den übrigen Unteransprüchen angegeben. Ein Ausführungsbeispiel ist in der Zeichnung dargestellt und wird nachfolgend im Einzelnen beschrieben. Die einzige Figur 1 zeigt die schematische Darstellung einer mit einer Beschichtung zur Verbesserung des Warmlöseverhaltens versehenen Aluminiumschraube.

Die als Ausführungsbeispiel gewählte Schraube 1 ist aus einer Aluminiumlegierung hergestellt und besteht aus einem Schraubenkopf 2 sowie einem an diesen angeformten Schraubenkörper 3, der mit einer Beschichtung 4 versehen ist. Die Beschichtung ist im Ausführungsbeispiel auf Basis einer wasserbasierenden PTFE-Emulsion (Basissystem) gebildet, die im Wesentlichen folgende Bestandteile enthält:

| | |
|---|---|
| - Ethen, homopolymer, oxidiert | (ca. 71 %) |
| - Paraffinwachse und Kohlenwasserstoffwachse | (ca. 2%) |
| - Tetrafluorethen-Homopolymer | (ca. 20%) |
| - Hexanatrium-2,2'-[vinylenbis[(3-sulfonato-4,1phenylen)imino[6-(diethylamino) 1,3,5-triazin-4,2-diyl]imino]]bis(benzol-1,4-disulfonat) | (ca. 2%) |
| - Additive (Netzmittel) | (ca. 5%) |

Diesem Basissystem sind mit Epoxy-Verbindungen oberflächenmodifizierte Siliziumoxidnanopartikel zugegeben, wobei die Partikel eine bi-modale Partikelgrößenverteilung aufweisen, deren Maxima eine Größe mit einem Mittelwert von 5 und 15 Nanometer aufweisen. Die Epoxyd-Gruppen sind durch Silane an die Partikeloberfläche angebunden, die bei erhöhter Temperatur miteinander vernetzen können.

Die erfindungsgemäße Beschichtung eignet sich insbesondere zur Einstellung des Warmlöseverhaltens sowohl von Aluminiumschrauben, als auch von Stahlschrauben.

## Patentansprüche

1. Beschichtung für Schrauben, insbesondere Aluminiumschrauben, basierend auf einer wasserbasierenden Polytetrafluorethylenemulsion, **dadurch gekennzeichnet, dass** dieser oberflächenmodifizierte Nanopartikel beigemischt sind.

2. Beschichtung nach Anspruch 1, **dadurch gekennzeichnet, dass** die oberflächenmodifizierten Nanopartikel aus Siliziumdioxid gebildet sind.

3. Beschichtung nach einem der vorgenannten Ansprüche, **dadurch gekennzeichnet, dass** die Nanopartikel eine polymodale, insbesondere bi-modale Partikelverteilung aufweisen.

4. Beschichtung nach Anspruch 3, **dadurch gekennzeichnet, dass** die Partikelverteilung zumindest ein Maximum mit einem Mittelwert von 5 Nanometer und ein Maximum mit einem Mittelwert von 15 Nanometer aufweist.

5. Beschichtung nach einem der vorgenannten Ansprüche, **dadurch gekennzeichnet, dass** die Nanopartikel an ihrer Oberfläche mit Epoxygruppen belegt sind, die erst unter erhöhten Temperaturen über 80°C vernetzen.

6. Verfahren zur Verbesserung des Warmlöseverhaltens von Schrauben, insbesondere von Aluminiumschrauben, **dadurch gekennzeichnet, dass** diese mit einer Beschichtung nach einem der vorgenannten Ansprüche beschichtet werden.
